# FASCICULE DE BREVET EUROPEEN

(11) **EP 3 344 706 B1**
(45) Date de publication et mention de la délivrance du brevet: **07.06.2023**
(21) Numéro de dépôt: 16775761.6
(22) Date de dépôt: 02.09.2016
(51) Int. Cl.: C08L 99/00, C09D 199/00, C09D 5/02, C09D 127/12, C09D 5/00, A47J 36/04, B05D 5/08, B32B 33/00

(54) **REVETEMENTS ANTIADHESIFS A BASE DE TANINS CONDENSES**
ANTIHAFTBESCHICHTUNGEN BASIEREND AUF KONDENSIERTE TANNINEN
ANTI ADHERENT COATINGS BASED ON CONDENSED TANNINS

(30) Priorité: 02.09.2015 FR 1558122
(43) Date de publication de la demande: 11.07.2018
(73) Titulaire: SEB S.A., 69130 Ecully (FR)
(72) Inventeur: POLESEL MARIS, Jérôme, 54135 Mexy (FR); JOUTANG, Isabelle, 73290 La Motte Servolex (FR)
(74) Mandataire: Regimbeau
(86) Numéro de dépôt international: PCT/FR2016/052170
(87) Numéro de publication internationale: WO 2017/037393

(56) Documents cités:
- WO-A1-90/05794
- WO-A2-2011/006065
- US-A- 3 975 214
- US-A- 4 180 406
- US-A- 4 948 513
- NATALIA BELLOTTI ET AL: "Quaternary Ammonium "Tannate" for Antifouling Coatings", INDUSTRIAL & ENGINEERING CHEMISTRY RESEARCH., vol. 51, no. 51, 26 décembre 2012 (2012-12-26), pages 16626-16632, XP055287571, US ISSN: 0888-5885, DOI: 10.1021/ie301524r

## Description

La présente invention concerne de manière générale des compositions pour revêtement (ou compositions de semi-fini ou semi-finis) ainsi que des compositions de revêtement antiadhésif (ou compositions de primaire ou primaires, ou compositions de couche intermédiaire ou midcoat, ou compositions de finition ou finish) comprenant de telles compositions pour revêtement.

L'invention appartient au domaine de la formulation de semi-finis, de primaires, de midcoat et de finish de revêtement antiadhésif destinés à être appliqués sur des articles chauffants, et plus particulièrement des articles culinaires ou électroménagers, ainsi qu'au domaine de tels revêtements antiadhésifs.

A titre d'exemples d'articles culinaires utilisables dans le cadre de la présente invention, on peut notamment citer les poêles, les sauteuses, les casseroles, les woks, les crêpières, les fait-tout, les marmites, les cocottes, les rôtissoires à oeufs et les poêles grill.

A titre d'exemples d'articles électroménagers utilisables dans le cadre de la présente invention, on peut notamment citer les cuves de friteuse, les poêlons ou caquelons pour fondue ou raclette, et les semelles de fer à repasser.

Il est notamment connu de l'homme de l'art que les articles culinaires doivent répondre à des critères de performances quant à leur antiadhésivité, leur résistance à la rayure et, plus généralement, leur résistance aux multiples agressions auxquelles ils sont soumis en usage.

Les revêtements à base de polymères fluorés sont ceux qui apportent le meilleur compromis pour l'ensemble de ces propriétés. Il subsiste toutefois une difficulté pour l'adhérence de ces revêtements sur le support de l'article et de très nombreuses solutions ont été proposées.

Une part importante des formulations destinées à promouvoir l'adhésion du polytétrafluoroéthylène (PTFE) est réalisée en utilisant une co-résine d'adhésion. Parmi les résines les plus utilisées, on retrouve les polymères hétérocycliques, tels que les polyamide-imides (PAI) et les polyimides (PI). Pour une utilisation en combinaison avec les dispersions colloïdales de PTFE, ces co-résines d'adhésion doivent nécessairement être préalablement mises en phase aqueuse.

Le produit de départ est une résine de polymère hétérocyclique en solution dans un solvant aprotique polaire, tel que la N-éthylpyrrolidone (NEP) ou la N-méthylpyrrolidone (NMP). Ensuite, une salification des groupements acides est réalisée par ajout d'amines primaires ou secondaires très basiques, puis de l'eau est introduite dans le mélange pour procéder à l'inversion de phase du mélange.

Il est à noter que la plupart des solvants aprotiques polaires sont soumis à un étiquetage en tant que produit nocif, voire même toxique, dans la réglementation REACH (Règlement de l'Union Européenne concernant l'enregistrement, l'évaluation et l'autorisation des substances chimiques, ainsi que les restrictions applicables à ces substances). De ce fait, l'impact sur l'environnement et la santé engendré par une telle utilisation est non négligeable.

En outre, l'utilisation d'amines de salification entraîne l'ouverture des cycles imides du polymère hétérocyclique et, de ce fait, la filmification est souvent moins bonne qu'espérée et l'adhérence et/ou la tenue à la corrosion du revêtement obtenu s'en trouvent affaiblies. Enfin, l'utilisation d'amines de salification, quel que soit leur type, accentue le jaunissement lors de l'élaboration du revêtement.

Récemment, il a été mis en lumière que certains polyphénols présents dans certains végétaux et l'alimentaire (notamment le thé vert, le vin rouge et le cacao) permettent d'arriver à des produits polymérisés pouvant adhérer sur différentes surfaces (Tadas S. Sileika et al., "Colorless Multifunctional Coatings Inspired by Polyphenols Found in Tea, Chocolate, and Wine", Angewandte Chemie International Edition 52(41), 10766-10770 (2013*)*). Les tanins hydrolysables (acide tannique, acide gallique, pyrogallol, épigallocatéchine gallate...) présents dans ces composés alimentaires présentent une structure chimique propice à l'adhésion par réaction chimique de déshydratation ou de chélation avec les métaux ou surfaces inorganiques.

Ces tanins hydrolysables polymérisés présentent cependant une résistance thermique assez basse et non compatible pour un usage à hautes températures, tel que nécessaire par exemple dans un article culinaire.

De façon intéressante, il a également été mis en lumière que des tanins condensés peuvent être utilisés pour la génération de mousses résistantes aux hautes températures (supérieures à 1400°C) et à la flamme d'un chalumeau (G. Tondi et al., "Tannin-based carbon foams", Carbon 47 (2009) 1480-1492*).*

Ces tanins sont obtenus à partir de végétaux (bois, écorces, marc) après une simple extraction à l'eau. Les tanins condensés représentent ainsi une voie très intéressante de ressources en matière première « verte » (c.à.d., biosourcée), alternative aux produits chimiques issus du pétrole.

WO 2011/006065A2 divulgue une composition aqueuse de revêtement comprenant une résine fluorocarbonée et un polyphénol.

Pour pallier les inconvénients de l'art antérieur, la demanderesse a mis au point des compositions de semi-fini, de primaire, de couche intermédiaire et de finition permettant d'obtenir des revêtements présentant un très faible impact sur l'environnement tout en présentant une excellente résistance à de hautes températures, à l'abrasion et à la corrosion ainsi que de très bonnes propriétés d'antiadhérence. En outre, les compositions de semi-fini, de primaire, de couche intermédiaire et de finition selon la présente invention présentent d'excellentes propriétés de mouillabilité et donc d'étalement sur le support sur lequel elles sont déposées.

Plus particulièrement, la présente invention a pour objet une composition pour revêtement (ou composition de semi-fini) comprenant au moins un tanin condensé et de l'eau, et ayant un pH supérieur à 7, caractérisée en ce qu'elle comprend en outre au moins un agent de polymérisation choisi parmi les dérivés de phosphate.

L'eau présente dans la composition pour revêtement agit comme solvant protique en solubilisant les tanins. Cette solubilisation est nécessaire afin de permettre la polymérisation des tanins condensés.

Avantageusement, la teneur massique d'eau, dans la composition pour revêtement, peut être comprise entre 50% et 95%, de préférence entre 60% et 90%, et de préférence entre 80% et 90% par rapport à la masse totale d'eau et de tanin condensé.

Dans le contexte de la présente invention, le terme "tanins condensés" désigne des tanins non hydrolysables.

Avantageusement, le ou les tanins condensés utilisables dans la composition pour revêtement de la présente invention peuvent avoir pour motif de base une ou plusieurs unité(s) monomère(s) flavan-3-ols (catéchine) et/ou flavan-3,4-diols (leucoanthocyanidines) et/ou phlorotanins.

De manière avantageuse, le ou les tanins condensés utilisables dans la composition pour revêtement de la présente invention peuvent avoir pour motif de base une ou plusieurs unité(s) monomère(s) répondant à la formule suivante : 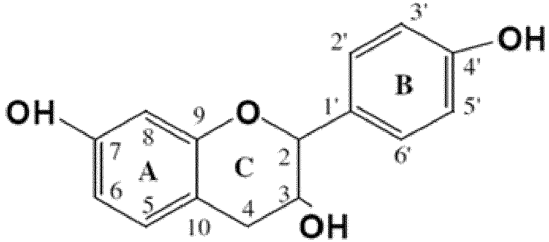 dans laquelle
- les carbones en position 6, 8, 2' et 6' sont substitués par un hydrogène,
- les carbones en position 4, 5, 3' et 5' sont indépendamment substitués par un groupement hydroxyle ou par un hydrogène.

Par exemple, le ou les tanins condensés utilisables dans la composition pour revêtement de la présente invention peuvent avoir pour motif de base une ou plusieurs unité(s) monomère(s) répondant à l'une des formules (I) à (VI) suivantes :

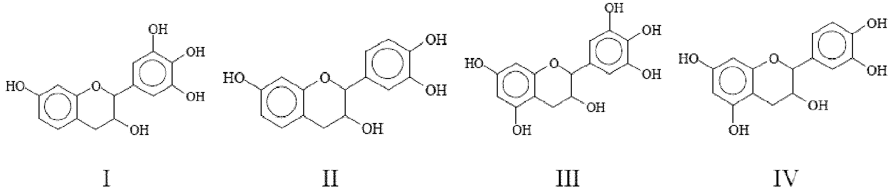

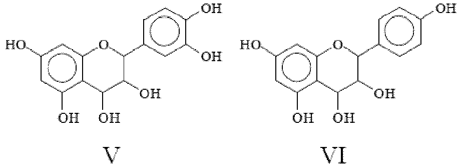

Les tanins condensés utilisables dans la composition pour revêtement selon l'invention peuvent par exemple être issus du règne végétal (ou biosourcés), et peuvent être par exemple choisis parmi les tanins issus du mimosa (notamment issus de bois et/ou d'écorce de mimosa), les tanins issus du quebracho (notamment issus de bois et/ou d'écorce de quebracho), les tanins issus du marc de raisin, les tanins issus du châtaignier (notamment issus de bois et/ou d'écorce de châtaignier), les tanins issus du pin (notamment issus de bois et/ou d'écorce de pin), les tanins issus des algues brunes et leurs mélanges.

Les tanins condensés utilisables dans la composition pour revêtement selon l'invention peuvent avantageusement être synthétiques, et peuvent par exemple être choisis parmi les oligo-proanthocyanidines (OPC) synthétiques tels que décrits au chapitre 4 de S. Quideau et al., "Plant Polyphenols: Chemical Properties, Biological Activities, and Synthesis", Angewandte Chemie International Edition 50(3), pp 586-621 (2011).

Les tanins condensés utilisables dans la composition pour revêtement selon l'invention peuvent avantageusement être un mélange de tanins condensés biosourcés et de tanins condensés synthétiques, tels que décrits ci-dessus.

Les tanins condensés peuvent être utilisés, dans la composition pour revêtement selon l'invention, seuls ou en mélange avec des tanins hydrolysables. Avantageusement, les tanins hydrolysables permettent un bon étalement ainsi qu'une bonne cohésion de la composition pour revêtement lors de la filmification.

Dans le contexte de la présente invention, le terme "tanins hydrolysables" désigne tout tanin ne répondant pas à la définition de "tanins condensés" donnée ci-dessus, et désigne plus particulièrement des composés comprenant des monomères, tels que l'acide gallique, le pyrogallol et également les catécholamines (par exemple la dopamine), liés entre eux par un carbohydrate, typiquement un glucose.

Les tanins hydrolysables utilisables dans la composition pour revêtement selon l'invention peuvent avantageusement être choisis parmi l'acide tannique, l'épigallocatéchine gallate (EGCG), l'épicatéchine gallate (ECG), l'épigallocatéchine (EGC).

Avantageusement, les tanins condensés, seuls ou en mélange avec des tanins hydrolysables, utilisables dans la composition pour revêtement selon l'invention peuvent être sous forme de poudre.

Dans le cas où des tanins condensés sont utilisés seuls, la poudre de tanins peut avantageusement être purifiée de tanins hydrolysables et/ou de sucres.

Dans le cas où des tanins condensés sont utilisés en mélange avec des tanins hydrolysables, la poudre de tanins peut avantageusement être purifiée de sucres.

La composition pour revêtement doit présenter un pH basique afin de déclencher la polymérisation des tanins condensés.

Avantageusement, le pH de la composition pour revêtement selon l'invention peut être compris entre 8 et 13, et de préférence entre 10 et 12.

Avantageusement, la composition pour revêtement comprend en outre un autre agent de polymérisation choisi parmi l'alcool furfurylique, le glyoxal et leurs mélanges.

Avantageusement, l'ajout d'un agent de polymérisation permet de favoriser la polymérisation des tanins.

Avantageusement, la teneur massique d'agent de polymérisation, dans la composition pour revêtement selon l'invention, est supérieure à 0% et inférieure à 50% par rapport à la masse totale d'agent de polymérisation et de tanin condensé.

De préférence, la teneur massique d'agent de polymérisation, dans la composition pour revêtement selon l'invention, peut être comprise entre 5% et 50%, de préférence entre 20% et 50%, par rapport à la masse totale d'agent de polymérisation et de tanin condensé.

Les dérivés de phosphate peuvent être avantageusement choisis parmi les alkyl phosphates et les phényl phosphates, et de préférence parmi les trialkyl phosphates, tels que le triéthylphosphate. Avantageusement, le glyoxal et les dérivés du phosphate permettent en outre d'améliorer notamment la résistance thermique du revêtement, et l'alcool furfurylique permet en outre d'améliorer la mouillabilité des compositions et donc la cohésion du revêtement obtenu.

Avantageusement, la composition pour revêtement peut comprendre en outre au moins un solvant.

Le solvant peut être protique. Avantageusement, le solvant protique peut servir d'inhibiteur radicalaire et ainsi prolonger la durée de vie (ou "pot life") de la composition en ralentissant la génération d'oligomère de tanins.

Avantageusement, le solvant peut être non toxique.

Le solvant utilisable dans la composition pour revêtement peut avantageusement comprendre au moins un alcool, et peut être choisi de préférence parmi l'isopropanol, le méthanol, l'éthanol et leurs mélanges.

Avantageusement, la composition pour revêtement comprend au plus 10% en masse, et de préférence au plus 9% en masse, de solvant par rapport à la masse totale de la composition pour revêtement.

La présente invention a également pour objet une composition de revêtement antiadhésif (ou composition de primaire ou composition de couche intermédiaire ou composition de finition), qui comprend :
- une composition pour revêtement comprenant au moins un tanin condensé et de l'eau, et ayant un pH supérieur à 7 ; et
- au moins une résine fluorocarbonée.

La ou les résines fluorocarbonées peuvent se présenter sous forme de poudre ou de dispersion aqueuse.

Avantageusement, la ou les résines fluorocarbonées peuvent être choisies dans le groupe comprenant le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

De manière avantageuse, la ou les résines fluorocarbonées peuvent être choisies parmi le polytétrafluoroéthylène (PTFE), les copolymères de tétrafluoroéthylène et de perfluoropropylvinyléther (PFA), les copolymères de tétrafluoroéthylène et d'hexafluoropropène (FEP), un mélange de PTFE et de PFA (PTFE/PFA), un mélange de PTFE et de FEP (PTFE/FEP).

De préférence, la ou les résines fluorocarbonées peuvent représenter de 10 à 99 % en masse, de préférence de 50 à 98 % en masse, de la masse totale en sec de la composition de revêtement antiadhésif.

Avantageusement, la teneur massique de résine fluorocarbonée dans la composition de revêtement antiadhésif selon l'invention peut être comprise entre 10% et 99% par rapport à la masse totale de résine fluorocarbonée et de tanin condensé. Dans le cas d'une composition de primaire de revêtement antiadhésif, la teneur massique de résine fluorocarbonée dans la composition de revêtement antiadhésif selon l'invention peut de préférence être comprise entre 30% et 60% par rapport à la masse totale de résine fluorocarbonée et de tanin condensé. Dans le cas d'une composition de couche intermédiaire de revêtement antiadhésif, la teneur massique de résine fluorocarbonée dans la composition de revêtement antiadhésif selon l'invention peut de préférence être comprise entre 50% et 95% par rapport à la masse totale de résine fluorocarbonée et de tanin condensé. Dans le cas d'une composition de finition de revêtement antiadhésif, la teneur massique de résine fluorocarbonée dans la composition de revêtement antiadhésif selon l'invention peut de préférence être comprise entre 98% et 99% par rapport à la masse totale de résine fluorocarbonée et de tanin condensé.

De préférence, la teneur massique d'eau dans la composition de revêtement antiadhésif selon l'invention est comprise entre 50% et 99,5%, de préférence entre 70% et 99,5%, par rapport à la masse totale d'eau et de tanin condensé.

De manière avantageuse, la composition de revêtement antiadhésif peut comprendre en outre au moins un solvant.

Avantageusement, le solvant peut être protique.

Avantageusement, le solvant peut être non toxique.

Le solvant utilisable dans la composition de revêtement antiadhésif, peut avantageusement comprendre au moins un alcool, et peut être choisi de préférence parmi l'isopropanol, le méthanol, l'éthanol et leurs mélanges.

Avantageusement, la composition de revêtement antiadhésif comprend au plus 10% en masse, et de préférence au plus 9% en masse, de solvant par rapport à la masse totale de la composition pour revêtement.

La composition de revêtement antiadhésif peut comprendre en outre tout type d'additifs adaptés connus de l'homme du métier tels que des agents épaississants, des agents mouillants, des tensio-actifs, des charges, des pigments, des particules anisotropes.

Des agents mouillants utilisables dans la composition de revêtement antiadhésif selon l'invention peuvent par exemple comprendre du polyéthylène glycol, du glycérol, de l'éthylène glycol.

Des charges microniques ou sub-microniques utilisables, sous forme de poudre ou de dispersion, dans la composition de revêtement antiadhésif selon l'invention pour améliorer la résistance à l'abrasion et au pelage du revêtement peuvent par exemple comprendre du SiO₂, de l'Al₂O₃, du TiO₂, du SiC, du diamant, du nitrure de bore, des oxydes de terres, tel que le CeO₂.

A titre de pigments utilisables dans le cadre de la présente invention, on peut notamment citer les pigments thermostables organiques ou inorganiques, les sels métalliques, les pigments semi-conducteurs thermochromes et leurs mélanges. Les pigments peuvent être indépendamment choisis parmi le dioxyde de titane, les spinelles, les oxydes de fer, le rouge de pérylène, le violet dioxazine, les oxydes mixtes d'aluminium et de cobalt, le noir de carbone, les oxydes de chrome et les oxydes de cuivre.

Les particules anisotropes utilisables dans le cadre de la présente invention sont des particules dont les dimensions caractéristiques ne sont pas identiques dans toutes les directions, comme par exemples des fibres (de forme essentiellement unidimensionnelle) ou des paillettes (de forme essentiellement bidimensionnelle ou plate). Les paillettes utilisables dans le cadre de la présente invention peuvent être indépendamment choisies parmi les paillettes de mica, enrobées ou non, les paillettes de silice, enrobées ou non, les paillettes d'aluminium, enrobées ou non, les paillettes d'oxyde de fer, enrobées ou non. les paillettes de mica ou de silice enrobées de dioxyde de titane. Les paillettes utilisables dans le cadre de la présente invention peuvent être traitées pour donner un effet de couleur particulier.

Les particules anisotropes utilisables dans le cadre de la présente invention peuvent par exemple être magnétisables ou électrisables. Dans le cadre de la présente invention, les particules magnétisables peuvent être avantageusement des particules comprenant au moins un métal ferromagnétique. Ces particules magnétisables peuvent être de nature homogène, c'est-à-dire constituées du même matériau, ou de nature composite, c'est-à-dire que ces particules magnétisables ont une structure coeur-enveloppe, dans laquelle le métal ferromagnétique se trouve dans le coeur et/ou dans l'enveloppe desdites particules. A titre d'exemples de particules magnétisables composites, on peut notamment citer des paillettes de mica enrobées d'oxyde de fer Fe₂O₃ ou des fibres d'acier inoxydable enrobées d'un matériau sol-gel, comme protection vis-à-vis de la corrosion lors des étapes de mise en oeuvre du revêtement, ou encore des paillettes en matériau plastique enrobées d'oxyde de fer Fe₂O₃, ou des paillettes dont le coeur est en métal ferromagnétique et l'enveloppe est formée d'un matériau plastique ou en un matériau sol-gel.

La présente invention a également pour objet un revêtement comprenant au moins une couche de la composition pour revêtement telle que définie ci-dessus et/ou au moins une couche de la composition de revêtement antiadhésif telle que définie ci-dessus.

Le revêtement selon l'invention peut par exemple comprendre une couche de composition pour revêtement telle que définie ci-dessus et destinée à être en contact avec la surface d'un support sur lequel le revêtement est appliqué. Cette couche est alors communément appelée "couche de primaire". Avantageusement, cette couche de primaire selon l'invention permet d'obtenir une excellente adhésion du revêtement sur le support.

Le revêtement selon l'invention peut par exemple comprendre une couche de composition pour revêtement telle que définie ci-dessus et destinée à être en contact avec l'environnement extérieur Cette couche est alors communément appelée "couche de finition". Avantageusement, cette couche de finition permet d'obtenir un revêtement dont la surface présente d'excellentes propriétés d'antiadhérence, notamment, des aliments cuits. En outre, si le revêtement est multicouche, cette couche de finition permet d'obtenir une très bonne cohésion du revêtement.

Le revêtement selon l'invention peut par exemple comprendre une couche de composition pour revêtement telle que définie ci-dessus et destinée à être disposée entre une couche de primaire et une couche de finition. Cette couche est alors communément appelée "couche intermédiaire".

Avantageusement, les couches de composition à base de tanins condensés selon l'invention peuvent être combinées avec des couches de revêtements fluorés classiques.

Ainsi, le revêtement selon la présente invention peut comprendre en outre au moins une couche d'une composition comprenant au moins une résine fluorocarbonée, éventuellement mélangée avec une résine d'accroche thermostable résistante à une température supérieure à 200°C.

La ou les résines fluorocarbonées peuvent être avantageusement choisies parmi le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

De préférence, la ou les résines fluorocarbonées peuvent être choisies parmi le polytétrafluoroéthylène (PTFE), les copolymères de tétrafluoroéthylène et de perfluoropropylvinyléther (PFA), les copolymères de tétrafluoroéthylène et d'hexafluoropropène (FEP), un mélange de PTFE et de PFA (PTFE/PFA), un mélange de PTFE et de FEP (PTFE/FEP).

La ou les résines d'accroche peuvent être avantageusement choisies parmi les polyamides imides (PAI), les polyéthers imides (PEI), les polyamides (PI), les polyéthercétones (PEK), les polyétheréthercétones (PEEK), les polyéthersulfures (PES), les sulfures de polyphénylène (PPS), et leurs mélanges.

La présente invention a également pour objet un article comprenant un support comprenant deux faces opposées, l'une au moins des faces opposées du support étant revêtue du revêtement tel que défini ci-dessus.

Avantageusement, le support de l'article peut être en plastique, en matériau métallique, en verre, en céramique ou en terre cuite. A titre de supports métalliques utilisables dans le cadre de la présente invention, on peut avantageusement citer les supports en aluminium ou alliage d'aluminium anodisé ou non, ou en aluminium ou alliage d'aluminium poli, brossé ou microbillé, sablé, traité chimiquement ou en acier inoxydable poli, brossé ou microbillé, ou en fonte de fer ou d'aluminium, ou en titane ou en cuivre martelé ou poli.

De manière avantageuse, l'article est un article culinaire dont l'une des faces du support constitue une face interne concave destinée à être en contact avec des aliments placés à l'intérieur dudit article et l'autre face du support de l'article est une face externe convexe destinée à être en contact avec une source de chaleur.

A titre d'exemples non limitatifs d'articles culinaires conformes à la présente invention, on citera notamment des articles culinaires tels que les casseroles et les poêles, les woks et les sauteuses, les crêpières, les grills, les fait-tout, les marmites, les cocottes, les rôtissoires à oeufs, les moules et plaques pour la pâtisserie, les plaques et grilles de barbecue.

L'article de la présente invention peut être un article électroménager. A titre d'exemples d'articles électroménagers utilisables dans le cadre de la présente invention, on peut notamment citer les cuves de friteuse, les poêlons ou caquelons pour fondue ou raclette, la cuve d'une friteuse ou d'une machine à pain, le bol d'un « *blender* », les plaques d'un fer à lisser et les semelles de fer à repasser.

La présente invention a également pour objet un procédé de fabrication d'un article tel que défini ci-dessus, comprenant les étapes suivantes :
i. la fourniture du support ;
ii. l'application, sur au moins une des faces opposées dudit support, d'au moins une couche de la composition pour revêtement telle que définie ci-dessus ; puis
iii. la cuisson de l'ensemble à une température comprise entre 150°C et 430°C.

La présente invention a également pour objet un autre procédé de fabrication d'un article tel que défini ci-dessus, comprenant les étapes suivantes :
i. la fourniture du support ;
ii. l'application, sur au moins une des faces opposées dudit support, d'au moins une couche de la composition de revêtement antiadhésif telle que définie ci-dessus, et éventuellement d'au moins une couche de la composition pour revêtement telle que définie ci-dessus ; puis
iii. la cuisson de l'ensemble à une température comprise entre 350°C et 430°C.

Avantageusement, ce procédé de fabrication peut comprendre en outre, entre les étapes d'application ii) et de cuisson iii), l'application, sur ladite couche de composition pour revêtement ou de composition de revêtement antiadhésif, d'au moins une couche d'une composition comprenant au moins une résine fluorocarbonée, éventuellement mélangée avec une résine d'accroche thermostable résistante à une température supérieure à 200°C.

Avantageusement, ce procédé de fabrication peut comprendre en outre, entre les étapes de fourniture i) et d'application ii), l'application, sur ladite face du support, d'au moins une couche d'une composition comprenant au moins une résine fluorocarbonée, éventuellement mélangée avec une résine d'accroche thermostable résistante à une température supérieure à 200°C.

L'application des différentes compositions peut se faire par toute technique adaptée connue de l'homme du métier, et par exemple par spray ou sérigraphie.

Dans le cas où plusieurs couches doivent être appliquées, une étape de sèche peut avantageusement être réalisée entre chaque application afin d'évaporer les solvants et l'eau de la dernière couche appliquée. Avantageusement, cette sèche permet de limiter, voir d'éliminer, la génération de défauts (bulles, fissures, etc ...) dans le revêtement lors de la cuisson ultérieure.

Dans le cas où plusieurs couches doivent être appliquées et où une sèche est réalisée entre chaque application, une étape de refroidissement peut avantageusement être réalisée entre la sèche de la dernière couche appliquée et l'application de la couche suivante. Avantageusement, ce refroidissement permet d'éviter un séchage trop rapide de la nouvelle couche et un phénomène de poudrage.

D'autres avantages et particularités de la présente invention résulteront de la description qui va suivre, donnée à titre d'exemple non limitatif et faite en référence aux figures annexées et aux exemples correspondants :
- la figure 1a représente une photographie d'un article, avant cuisson, réalisé selon une première variante de réalisation de la présente invention décrit dans l'exemple 7 ;
- la figure 1b représente une photographie de l'article illustré dans la figure 1a après cuisson ;
- la figure 2a représente une photographie d'un article, avant cuisson, réalisé selon une deuxième variante de réalisation de la présente invention décrit dans l'exemple 8 ;
- la figure 2b représente une photographie de l'article illustré dans la figure 2a après cuisson ;
- la figure 3a représente une photographie d'un article, avant cuisson, réalisé selon une troisième variante de réalisation de la présente invention décrit dans l'exemple 9 ;
- la figure 3b représente une photographie de l'article illustré dans la figure 3a après cuisson ; et
- la figure 4 représente une photographie d'un article, après cuisson, réalisé selon une quatrième variante de réalisation de la présente invention décrit dans l'exemple 10.

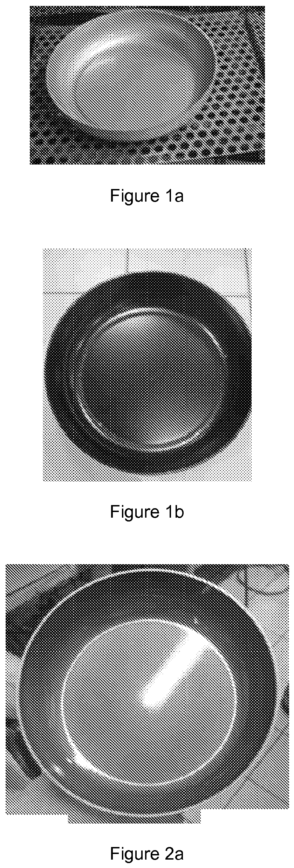

Les différentes variantes de réalisation illustrées sur les figures 1a à 4 sont commentées dans les exemples ci-après.

### EXEMPLES

### Tests

### Evaluation de l'adhérence d'un revêtement sur une surface

On effectue un test par quadrillage selon la NORME NF T 30-038 (NORME NF EN ISO 2409), suivi d'une immersion de la surface revêtue dans 3 environnements, consistant en une alternance de 3 cycles de : 3 heures dans de l'eau bouillante suivies de 3 heures dans de l'huile à 200°C suivies d'un lavage avec détergent de 2h40 dans un lave-vaisselle. Puis, après quadrillage de la surface en 10x10=100 carrés sur 1 cm² au moyen d'une lame fine de rasoir, on observe si le revêtement antiadhésif présente ou non des arrachements ou des soulèvements au niveau de chaque carré. La cotation est réalisée comme expliqué dans le tableau ci-dessous.

| Cotation | Description |
|---|---|
| 0 | Les bords des incisions sont parfaitement lisses : aucun des carrés du quadrillage ne s'est détaché. |
| 1 | Détachement de petites écailles du revêtement aux intersections des incisions, qui affecte environ 5 % de la partie quadrillée. |
| 2 | Le revêtement s'est détaché le long des bords ou aux intersections des incisions, et la surface détachée représente nettement plus de 5 % jusqu'à environ 15 % de la partie quadrillée. |
| 3 | Le revêtement s'est détaché le long des bords des incisions en partie ou en totalité en larges bandes ou s'est détaché en partie ou en totalité en divers endroits des quadrillages. La surface détachée représente nettement plus de 15 % jusqu'à environ 35 % de la partie quadrillée. |
| 4 | Le revêtement s'est détaché le long des bords des incisions en larges bandes ou quelques carrés se sont détachés en partie ou en totalité. La surface détachée représente nettement plus de 35 % jusqu'à environ 65 % de la partie quadrillée. |
| 5 | Tous les degrés d'écaillage qui ne peuvent pas être cotés selon la cotation 4. |

### Test d'hydrophobicité d'un revêtement

On évalue le caractère hydrophobe d'un revêtement en mesurant l'angle de contact d'une goutte d'eau sur le revêtement avec un goniomètre de type Digidrop de GBX.

### Mesure d'épaisseur d'un revêtement

L'épaisseur d'un revêtement est mesurée à l'aide d'un dispositif de mesure d'épaisseurs de revêtements tel que celui commercialisé par la société Fischer Instruments sous la marque PERMASCOPE^{®}.

3 mesures sont réalisées sur 9 zones différentes du revêtement et la moyenne est calculée.

### Exemples réalisés

### Exemple 1 - Préparation d'une composition pour revêtement SF1

On prépare une composition pour revêtement SF1 à base de tanins condensés issus du Mimosa, dont la composition est indiquée dans le tableau ci-après.

| | **SF1 (masse en g)** | **% humide** | **% sec** |
|---|---|---|---|
| Tanin condensé issu du Mimosa, sous forme de poudre | 30,0 | 12,41 | 65,7 |
| NH₄OH (à 10,25% dans de l'eau) | 180,0 | 74,44 | - |
| Glycérol | 1,8 | 0,74 | - |
| Triéthyl phosphate (TEP) (à 52,2% d'extrait sec) | 30,0 | 12,41 | 34,3 |
| TOTAL | 241,8 | 100,0 | 100,0 |

La composition pour revêtement SF1 est préparée à température ambiante par :
- l'obtention d'un mélange homogène comportant l'ammoniaque et les additifs (glycérol et TEP) par agitation au disperseur à pale cisaillante ;
- l'addition de la poudre de tanins, sous agitation afin d'obtenir un mélange homogène.

Les caractéristiques de la composition SF1 ainsi obtenue sont mesurées :
- viscosité : 33 s à la coupe de viscosité AFNOR avec orifice de 2,5 mm (C.A. 2,5)
- pH : 11,3

### Exemple 2 - Préparation d'une composition pour revêtement SF2

L'exemple 2 ne fait pas partie de l'invention.

On prépare une composition pour revêtement SF2 à base de tanins condensés issus du Quebracho, dont la composition est indiquée dans le tableau ci-après.

| | **SF2 (masse en g)** | **% humide** | **% sec** |
|---|---|---|---|
| Tanin condensé issu du Quebracho, sous forme de poudre | 10,0 | 5,89 | 50,25 |
| NH₄OH (à 10,25% dans de l'eau) | 40,0 | 23,54 | - |
| Glycérol | 7,0 | 4,12 | - |
| Alcool furfurylique (FA) | 9,9 | 5,83 | 49,75 |
| Eau déminéralisée | 103,0 | 60,62 | - |
| TOTAL | 170,0 | 100,00 | 100,00 |

La composition pour revêtement SF2 est préparée à température ambiante par :
- l'obtention d'un mélange homogène comportant l'ammoniaque et le glycérol par agitation au disperseur à pale cisaillante ;
- l'addition de la poudre de tanins, toujours sous agitation ;
- l'addition de FA, toujours sous agitation; et enfin
- l'homogénéisation de la composition pour revêtement par prolongation de l'agitation.

Les caractéristiques de la composition SF2 ainsi obtenue sont mesurées :
- viscosité : 33 s à la coupe de viscosité AFNOR avec orifice de 2,5 mm (C.A. 2,5)
- pH : 6,4

### Exemple 3 - Préparation d'une composition de couche de primaire de revêtement antiadhésif P1

On prépare une composition de revêtement antiadhésif P1 à partir de la composition pour revêtement SF1 de l'exemple 1, dont la composition est indiquée dans le tableau ci-après.

| | **P1 (masse humide en g)** | **% humide** | **% sec** |
|---|---|---|---|
| Dispersion de PTFE (à 60% dans de l'eau) | 26,0 | 17 | 39,5 |
| SF1 (à 18,9% d'extrait sec) | 126,5 | 83 | 60,5 |
| TOTAL | 152,5 | 100 | 100,0 |

La composition de revêtement antiadhésif P1 est préparée à température ambiante par :
- l'agitation au disperseur à pale typhon (non-cisaillante) de la dispersion de PTFE avec SF1 afin d'obtenir un mélange homogène.

Les caractéristiques de la composition P1 ainsi obtenue sont mesurées :
- viscosité : 43 s à la coupe de viscosité AFNOR avec orifice de 2,5 mm (C.A. 2,5)
- pH : 10 à 11

### Exemple 4 - Préparation d'une composition de couche de primaire de revêtement antiadhésif P2

On prépare une composition de revêtement antiadhésif P2 à partir de la composition pour revêtement SF1 de l'exemple 1, dont la composition est indiquée dans le tableau ci-après.

| | **P2 (masse en g)** | **% humide** | **% sec** |
|---|---|---|---|
| Dispersion de PTFE (à 60% dans de l'eau) | 58,07 | 11,8 | 27,6 |
| Dispersion de PFA (à 50% dans de l'eau) | 30,32 | 6,2 | 12,0 |
| SF1 (à 18,9% d'extrait sec) | 403,23 | 82,0 | 60,4 |
| TOTAL | 491,62 | 100,0 | 100,0 |

La composition de revêtement antiadhésif P2 est préparée à température ambiante par :
- l'agitation au disperseur à pale typhon (non-cisaillante) de la dispersion de PTFE et de la dispersion de PFA avec SF1 afin d'obtenir un mélange homogène.

Les caractéristiques de la composition P2 ainsi obtenue sont mesurées :
- viscosité : 43 s à la coupe de viscosité AFNOR avec orifice de 2,5 mm (C.A. 2,5)
- pH : 10 à 11

### Exemple 5 - Préparation d'une composition de couche intermédiaire de revêtement antiadhésif M1.

On prépare une composition de revêtement antiadhésif M1 à partir de la composition pour revêtement SF1 de l'exemple 1, dont la composition est indiquée dans le tableau ci-après.

| | **M1 (masse en g)** | **% humide** | **% sec** |
|---|---|---|---|
| Dispersion de PTFE (à 60% dans de l'eau) | 232,28 | 52,4 | 64,23 |
| Dispersion de PFA (à 50% dans de l'eau) | 121,20 | 27,3 | 27,93 |
| SF1 (à 18,9% d'extrait sec) | 90,00 | 20,3 | 7,84 |
| TOTAL | 443,48 | 100,0 | 100,00 |

La composition de revêtement antiadhésif M1 est préparée à température ambiante par :
- l'agitation au disperseur à pale typhon (non-cisaillante) de la dispersion de PTFE et de la dispersion de PFA avec SF1 afin d'obtenir un mélange homogène.

Les caractéristiques de la composition M1 ainsi obtenue sont mesurées :
- viscosité : 53 s à la coupe de viscosité AFNOR avec orifice de 2,5 mm (C.A. 2,5)
- pH : 10 à 11

### Exemple 6 - Préparation d'une composition de couche de finition de revêtement antiadhésif F1

On prépare une composition de revêtement antiadhésif F1 à partir de la composition pour revêtement SF2 de l'exemple 2, dont la composition est indiquée dans le tableau ci-après.

| | **F1 (masse humide en g)** | **% humide** | **% sec** | **F1 (masse sec en g)** |
|---|---|---|---|---|
| Dispersions de PTFE (à 60% dans de l'eau) | 84,94 | 88,78 | 97,6 | 50,96 |
| PropylèneGlycol (PG) | 1,52 | 1,59 | - | - |
| SF2 (à 11,7% d'extrait sec) | 9,00 | 9,41 | 2,0 | 1,05 |
| Paillettes de mica | 0,21 | 0,22 | 0,4 | 0,21 |
| TOTAL | 95,67 | 100,00 | 100,0 | 52,22 |

La composition de revêtement antiadhésif F1 est préparée à température ambiante par :
- l'agitation au disperseur à pale typhon (non-cisaillante) de la dispersion de PTFE avec le PG et SF2 afin d'obtenir un mélange homogène ; et enfin
- l'ajout des paillettes de mica, toujours sous agitation pour avoir un mélange homogène.

Les caractéristiques de la composition F1 ainsi obtenue sont mesurées :
- viscosité : 45 s à la coupe de viscosité AFNOR avec orifice de 2,5 mm (C.A. 2,5)
- pH : 9 à 11

### Exemple 7 - Préparation d'une composition de couche de finition de revêtement antiadhésif F2

On prépare une composition de revêtement antiadhésif F2 à partir de la composition pour revêtement SF1 de l'exemple 1, dont la composition est indiquée dans le tableau ci-après.

| | **F2 (masse humide en g)** | **% humide** | **% sec** | **F2 (masse sec en g)** |
|---|---|---|---|---|
| Dispersions de PTFE (à 60% dans de l'eau) | 84,94 | 91,71 | 98,1 | 50,96 |
| SF1 (à 18,9% d'extrait sec) | 4,00 | 4,32 | 1,5 | 0,76 |
| Paillettes de mica | 0,21 | 0,23 | 0,4 | 0,21 |
| Eau | 3,46 | 3,74 | - | - |
| TOTAL | 92,61 | 100,00 | 100,0 | 51,93 |

La composition de revêtement antiadhésif F2 est préparée à température ambiante par :
- l'agitation au disperseur à pale typhon (non-cisaillante) de la dispersion de PTFE avec SF1 afin d'obtenir un mélange homogène ;
- l'ajout des paillettes de mica, toujours sous agitation pour avoir un mélange homogène ; et enfin
- l'ajout de l'eau, toujours sous agitation pour avoir un mélange homogène.

Les caractéristiques de la composition F2 ainsi obtenue sont mesurées :
- viscosité : 45 s à la coupe AFNOR de viscosité avec orifice de 2.5 mm (C.A. 2.5)
- pH : 9 à 11

### Exemple 8 - Préparation d'un support comprenant une couche de composition SF1

La composition de revêtement SF1 de l'exemple 1 est enduite par spray sur une surface d'un support en aluminium ayant subi au préalable un traitement de surface pour avoir un état de surface propre et propice au bon mouillage de la composition.

Le séchage du film est réalisé après enduction à environ 70-80°C pour fixer la composition sur la surface.

Le film ainsi obtenu, d'aspect brillant et de couleur ocre jaune, témoigne du bon pouvoir couvrant de la composition SF1, comme cela est illustré sur la Figure 1a.

Après cuisson à 430°C pendant 11 minutes, on obtient un film uniforme, comme cela est illustré sur la Figure 1b, d'aspect lisse et brillant et de couleur brun sombre.

L'épaisseur moyenne du film cuit mesurée est de 6,4 µm.

Le film cuit présente une très forte adhérence au support : le test d'adhérence réalisé sur la surface revêtue du film cuit donne une cotation de 0.

### Exemple 9 - Préparation d'un support comprenant une couche de composition P1

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition sur la surface.

Le film ainsi obtenu, d'aspect brillant et de couleur ocre jaune, témoigne du bon étalement et du bon pouvoir couvrant de la composition P1, comme cela est illustré sur la Figure 2a.

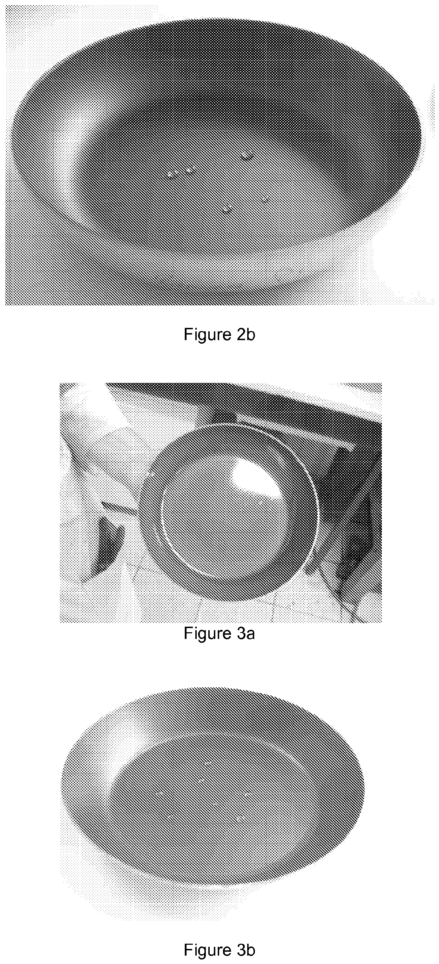

Après cuisson à 430°C pendant 11 minutes, on obtient un film uniforme, comme cela est illustré sur la Figure 2b, d'aspect mat et de couleur brun sombre.

L'épaisseur moyenne du film cuit mesurée est de 6 µm.

Le film cuit présente une très forte adhérence au support : le test d'adhérence réalisé sur la surface revêtue du film cuit donne une cotation de 0.

Le film cuit présente en outre un comportement très hydrophobe : l'angle de contact avec une goutte d'eau est supérieur à 100°.

### Exemple 10 - Préparation d'un support comprenant une couche de composition P1 et une couche de composition P2

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition P1 sur la surface. Le support est ensuite refroidi à température ambiante.

La composition de revêtement antiadhésif P2 est ensuite enduite par spray sur la surface enduite de la composition P1 séchée.

Le séchage du film est réalisé après enduction à environ 70-80°C pour fixer la composition P2 sur le film de composition P1.

Le composite de films P1+P2 ainsi obtenu, d'aspect brillant et de couleur ocre marron, témoigne du bon étalement et du bon pouvoir couvrant des compositions P1 et P2, comme cela est illustré sur la Figure 3a.

Après cuisson à 430°C pendant 11 minutes, on obtient un revêtement P1+P2 uniforme, comme cela est illustré sur la Figure 3b, d'aspect mat et de couleur brun sombre.

L'épaisseur moyenne du revêtement mesurée est de 10 µm.

Le revêtement présente une très forte adhérence au support : le test d'adhérence réalisé sur la surface du revêtement donne une cotation de 0.

Le revêtement présente en outre un comportement hydrophobe : l'angle de contact entre la surface du revêtement et une goutte d'eau est supérieur à 120°.

### Exemple 11 - Préparation d'un support comprenant une couche de composition P1 et une couche de composition M1

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition P1 sur la surface. Le support est ensuite refroidi à température ambiante.

La composition de revêtement antiadhésif M1 est ensuite enduite par spray sur la surface enduite de la composition P1 séchée.

Le séchage du film est réalisé après enduction à environ 70-80°C pour fixer la composition M1 sur le film de composition P1.

Le composite de films P1+M1 ainsi obtenu, d'aspect brillant et de couleur ocre marron, témoigne du bon étalement et du bon pouvoir couvrant des compositions P1 et M1.

Après cuisson à 430°C pendant 11 minutes, on obtient un revêtement P1+ M1 uniforme, d'aspect mat et de couleur noir.

L'épaisseur moyenne du revêtement mesurée est de 14 µm.

Le revêtement présente une très forte adhérence au support : le test d'adhérence réalisé sur la surface du revêtement donne une cotation de 0.

Le revêtement présente en outre un comportement hydrophobe : l'angle de contact entre la surface du revêtement et une goutte d'eau est supérieur à 100°.

### Exemple 12 - Préparation d'un support comprenant une couche de composition P1, une couche de composition P2 et une couche de composition F2

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition P1 sur la surface. Le support est ensuite refroidi à température ambiante.

La composition de revêtement antiadhésif P2 est ensuite enduite par spray sur la surface enduite de la composition P1 séchée.

Le séchage du film est réalisé après enduction à environ 70-80°C pour fixer la composition P2 sur le film de composition P1. Le support est ensuite refroidi à température ambiante.

La composition de revêtement antiadhésif F2 est ensuite enduite par spray sur la surface revêtue du composite de films P1+P2 séchés.

Le séchage du film est réalisé après enduction à environ 70-80°C pour fixer la composition F2 sur le composite de films P1+P2.

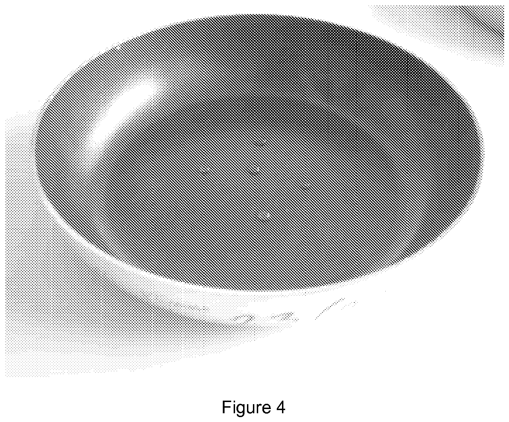

Après cuisson à 430°C pendant 11 minutes, on obtient un revêtement P1+P2+F2 uniforme, comme cela est illustré sur la Figure 4, d'aspect brillant et de couleur brun sombre pailleté.

L'épaisseur moyenne du revêtement mesurée est de 23 µm.

Le revêtement présente une très forte adhérence au support : le test d'adhérence réalisé sur la surface du revêtement donne une cotation de 0.

Le revêtement présente en outre un comportement hydrophobe : l'angle de contact entre la surface du revêtement et une goutte d'eau est supérieur à 100°.

Le revêtement présente également un comportement antiadhésif validé par plusieurs cycles de cuisson d'un volume de 30 ml de lait sur la surface du revêtement jusqu'à carbonisation du liquide. Le lait carbonisé en surface se détache ensuite facilement du revêtement par la simple pression du jet d'eau froide du robinet.

### Exemple 13 - Préparation d'un support comprenant une couche de composition P1, une couche de composition M1 et une couche de composition F2

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition P1 sur la surface. Le support est ensuite refroidi à température ambiante.

La composition de revêtement antiadhésif M1 est ensuite enduite par spray sur la surface enduite de la composition P1 séchée.

Le séchage du film est réalisé après enduction à environ 70-80°C pour fixer la composition M1 sur le film de composition P1. Le support est ensuite refroidi à température ambiante.

La composition de revêtement antiadhésif F2 est ensuite enduite par spray sur la surface revêtue du composite de films P1+ M1 séchés.

Le séchage du film est réalisé après enduction à environ 70-80°C pour fixer la composition F2 sur le composite de films P1+ M1.

Après cuisson à 430°C pendant 11 minutes, on obtient un revêtement P1+ M1+F2 uniforme, d'aspect brillant et de couleur brun sombre pailleté.

L'épaisseur moyenne du revêtement mesurée est de 27 µm.

Le revêtement présente une très forte adhérence au support : le test d'adhérence réalisé sur la surface du revêtement donne une cotation de 0.

Le revêtement présente en outre un comportement hydrophobe : l'angle de contact entre la surface du revêtement et une goutte d'eau est supérieur à 100°.

Le revêtement présente également un comportement antiadhésif validé par plusieurs cycles de cuisson d'un volume de 30 ml de lait sur la surface du revêtement jusqu'à carbonisation du liquide. Le lait carbonisé en surface se détache ensuite facilement du revêtement par la simple pression du jet d'eau froide du robinet.

### Exemple 14 - Préparation d'un support comprenant une couche de composition P1 et une couche de composition F1

La composition de revêtement antiadhésif P1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition P1 sur la surface. Le support est ensuite refroidi à température ambiante.

La composition de revêtement antiadhésif F1 est ensuite enduite par spray sur la surface enduite de la composition P1 séchée.

Le séchage du film est réalisé après enduction à environ 70-80°C pour fixer la composition F1 sur le film de composition P1.

Après cuisson à 430°C pendant 11 minutes, on obtient un revêtement P1+F1 uniforme, d'aspect mat et de couleur brun sombre.

L'épaisseur moyenne du revêtement mesurée est de 18 µm.

Le revêtement présente une très forte adhérence au support : le test d'adhérence réalisé sur la surface du revêtement donne une cotation de 0.

Le revêtement présente en outre un comportement hydrophobe : l'angle de contact entre la surface du revêtement et une goutte d'eau est supérieur à 100°.

### Exemple Comparatif 1 - Préparation d'une composition pour revêtement SFC

On prépare une composition pour revêtement SFC, dont la composition est indiquée dans le tableau ci-après.

| | **SFC (masse humide en g)** | **% humide** | **SFC (masse sec en g)** |
|---|---|---|---|
| Résine PAI (30% dans de la NEP) | 325,0 | 32,50 | 97,5 |
| NMP | 78,3 | 7,83 | - |
| NEP | 76,8 | 7,68 | - |
| Triéthylamine | 23,6 | 2,36 | - |
| Diéthyléthanolamine | 8,9 | 0,89 | - |
| Eau déminéralisée | 487,4 | 48,74 | - |
| Total | 1000,0 | 100,00 | 97,5 |

La composition pour revêtement SFC est préparée à température ambiante par :
- l'obtention d'un mélange homogène comportant la résine PAI, les solvants et les amines par agitation au disperseur à pale cisaillante ;
- l'addition de l'eau déminéralisée toujours sous agitation afin d'obtenir un mélange homogène ; et enfin
- le broyage du mélange pendant 1h30.

La viscosité de la composition SFC ainsi obtenue est mesurée :
- viscosité : 10-15 s à la coupe AFNOR de viscosité avec orifice de 4 mm (C.A. 4)

### Exemple Comparatif 2 - Préparation d'une composition de couche de primaire de revêtement antiadhésif PC1

On prépare une composition de revêtement antiadhésif PC1 à partir de la composition pour revêtement SFC1 de l'exemple comparatif 1, dont la composition est indiquée dans le tableau ci-après.

| | **PC1 (masse humide en g)** | **PC1 (masse sec en g)** | **% sec** |
|---|---|---|---|
| SFC (à 9,75% d'extrait sec) | 145,9 | 14,22 | 50 |
| Dispersion de PTFE (à 60% dans de l'eau) | 23,7 | 14,22 | 50 |
| Total | 169,6 | 28,44 | 100 |

La composition de revêtement antiadhésif PC1 est préparée à température ambiante par :
- l'agitation au disperseur à pale typhon (non-cisaillante) de la dispersion de PTFE avec SFC afin d'obtenir un mélange homogène.

La viscosité de la composition PC1 ainsi obtenue est mesurée :
- viscosité : 50-60 s à la coupe AFNOR de viscosité avec orifice de 2,5 mm (C.A. 2,5)

### Exemple Comparatif 3 - Préparation d'une composition de couche de primaire de revêtement antiadhésif PC2

On prépare une composition de revêtement antiadhésif PC2 à partir de la composition pour revêtement SFC1 de l'exemple comparatif 1, dont la composition est indiquée dans le tableau ci-après.

| | **PC2 (masse humide en g)** | **PC2 (masse sec en g)** | **% sec** |
|---|---|---|---|
| SFC (à 9,75% d'extrait sec) | 328,0 | 32,0 | 50,0 |
| Dispersion de PTFE (à 60% dans de l'eau) | 37,5 | 22,5 | 35,2 |
| Dispersion de PFA (à 50% dans de l'eau) | 19,0 | 9,5 | 14,8 |
| Total | 384,5 | 64,0 | 100,0 |

La composition de revêtement antiadhésif PC2 est préparée à température ambiante par :
- l'agitation au disperseur à pale typhon (non-cisaillante) des dispersions de PTFE et de PFA avec SFC afin d'obtenir un mélange homogène.

La viscosité de la composition PC2 ainsi obtenue est mesurée :
- viscosité : 40-50 s à la coupe AFNOR de viscosité avec orifice de 2,5 mm (C.A. 2,5)

### Exemple Comparatif 4 - Préparation d'un support comprenant une couche de composition PC1

La composition de revêtement antiadhésif PC1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition sur la surface.

Après cuisson à 430°C pendant 11 minutes, on obtient un film uniforme d'épaisseur moyenne mesurée de 5 µm.

Le film cuit présente une très forte adhérence au support : le test d'adhérence réalisé sur la surface revêtue du film cuit donne une cotation de 0.

Le film cuit présente en outre un comportement hydrophobe : l'angle de contact avec une goutte d'eau est supérieur à 100°.

### Exemple Comparatif 5 - Préparation d'un support comprenant une couche de composition PC1 et une couche de composition PC2

La composition de revêtement antiadhésif PC1 est enduite par spray sur une surface d'un support d'aluminium ayant subi au préalable un traitement de surface pour avoir un état de surface propre et propice au bon mouillage du primaire.

Le séchage du film est réalisé après enduction à environ 70-80°C pour fixer la composition PC1 sur la surface. Le support est ensuite refroidi à température ambiante.

La composition de revêtement antiadhésif PC2 est ensuite enduite par spray sur la surface enduite de la composition PC1 séchée.

Le séchage du film est réalisé après enduction à environ 70-80°C pour fixer la composition PC2 sur le film de composition PC1.

Après cuisson à 430°C pendant 11 minutes, on obtient un revêtement P1+P2 uniforme d'épaisseur moyenne mesurée de 11 µm.

Le revêtement présente une très forte adhérence au support : le test d'adhérence réalisé sur la surface du revêtement donne une cotation de 0.

Le revêtement présente en outre un comportement assez hydrophobe : l'angle de contact entre la surface du revêtement et une goutte d'eau est supérieur à 90°.

## Revendications

1. Composition pour revêtement comprenant au moins un tanin condensé et de l'eau, et ayant un pH supérieur à 7, **caractérisée en ce qu'**elle comprend en outre au moins un agent de polymérisation choisi parmi les dérivés de phosphate.

2. Composition pour revêtement selon la revendication 1, dans laquelle la teneur massique d'eau est comprise entre 50% et 95% par rapport à la masse totale d'eau et de tanin condensé.

3. Composition pour revêtement selon l'une quelconque des revendications précédentes, dans laquelle le tanin condensé a pour motif de base une ou plusieurs unité(s) monomère(s) flavan-3-ols et/ou flavan-3,4-diols et/ou phlorotanins.

4. Composition pour revêtement selon l'une quelconque des revendications précédentes, dans laquelle le tanin condensé a pour motif de base une ou plusieurs unité(s) monomère(s) répondant à la formule suivante : 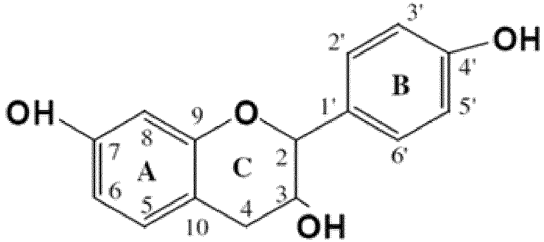 dans laquelle
- les carbones en position 6, 8, 2' et 6' sont substitués par un hydrogène,
- les carbones en position 4, 5, 3' et 5' sont indépendamment substitués par un groupement hydroxyle ou par un hydrogène.

5. Composition pour revêtement selon l'une quelconque des revendications précédentes, dans laquelle le tanin condensé est biosourcé ou synthétique.

6. Composition pour revêtement selon l'une quelconque des revendications précédentes, comprenant en outre un autre agent de polymérisation choisi parmi l'alcool furfurylique, le glyoxal et leurs mélanges.

7. Composition de revêtement antiadhésif comprenant une composition pour revêtement et au moins une résine fluorocarbonée, la composition pour revêtement ayant un pH supérieur à 7 et comprenant au moins un tanin condensé et de l'eau.

8. Composition de revêtement antiadhésif selon la revendication 7, dans laquelle le tanin condensé a pour motif de base une ou plusieurs unité(s) monomère(s) flavan-3-ols et/ou flavan-3,4-diols et/ou phlorotanins.

9. Composition de revêtement antiadhésif selon l'une quelconque des revendications 7 et 8, dans laquelle le tanin condensé a pour motif de base une ou plusieurs unité(s) monomère(s) répondant à la formule suivante : 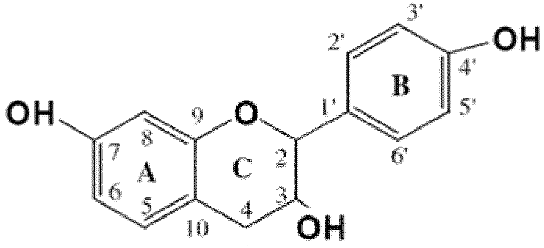 dans laquelle
- les carbones en position 6, 8, 2' et 6' sont substitués par un hydrogène,
- les carbones en position 4, 5, 3' et 5' sont indépendamment substitués par un groupement hydroxyle ou par un hydrogène.

10. Composition de revêtement antiadhésif selon l'une quelconque des revendications 7 à 9, dans laquelle le tanin condensé est biosourcé ou synthétique.

11. Composition de revêtement antiadhésif selon l'une quelconque des revendications 7 à 10, dans laquelle la composition pour revêtement comprend en outre au moins un agent de polymérisation, de préférence choisi parmi les dérivés de phosphate, l'alcool furfurylique, le glyoxal et leurs mélanges.

12. Composition de revêtement antiadhésif selon l'une quelconque des revendications 7 à 11, dans laquelle la résine fluorocarbonée est choisie parmi le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

13. Composition de revêtement antiadhésif selon l'une quelconque des revendications 7 à 12, dans laquelle la résine fluorocarbonée représente de 10 à 99 % en masse de la masse totale en sec de la composition de revêtement antiadhésif.

14. Revêtement comprenant au moins une couche de la composition pour revêtement selon l'une quelconque des revendications 1 à 6 et/ou au moins une couche de la composition de revêtement antiadhésif selon l'une quelconque des revendications 7 à 13.

15. Revêtement comprenant au moins une couche de composition pour revêtement et au moins une couche de la composition de revêtement antiadhésif selon l'une quelconque des revendications 7 à 13, la composition pour revêtement ayant un pH supérieur à 7 et comprenant au moins un tanin condensé et de l'eau.

16. Revêtement selon l'une quelconque des revendications 14 et 15, comprenant en outre au moins une couche d'une composition comprenant au moins une résine fluorocarbonée, éventuellement mélangée avec une résine d'accroche thermostable résistante à une température supérieure à 200°C.

17. Article comprenant un support comprenant deux faces opposées, l'une au moins des faces opposées du support étant revêtue du revêtement selon l'une quelconque des revendications 14 à 16.

## Patentansprüche

1. Zusammensetzung für Beschichtung, die mindestens ein kondensiertes Tannin und Wasser umfasst und einen pH über 7 hat, **dadurch gekennzeichnet, dass** sie ferner mindestens ein Polymerisationsmittel umfasst, das aus den Phosphatderivaten ausgewählt ist.

2. Zusammensetzung für Beschichtung nach Anspruch 1, wobei der Massengehalt an Wasser zwischen 50 % und 95 % im Verhältnis zur Gesamtmasse an Wasser und kondensiertem Tannin liegt.

3. Zusammensetzung für Beschichtung nach einem der vorangehenden Ansprüche, wobei das kondensierte Tannin als Basismotiv eine oder mehrere Monomereinheit(en) Flavan-3-ole und/oder Flavan-3,4-diole und/oder Phlorotannine hat.

4. Zusammensetzung für Beschichtung nach einem der vorangehenden Ansprüche, wobei das kondensierte Tannin als Basismotiv eine oder mehrere Monomereinheit(en) hat, die der folgenden Formel entspricht/entsprechen: 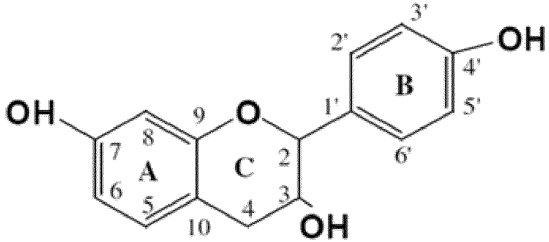 wobei
- die Kohlenstoffe an Position 6, 8, 2' und 6' von einem Wasserstoff substituiert sind,
- die Kohlenstoffe an Position 4, 5, 3' und 5' unabhängig von einer Hydroxylgruppe oder von einem Wasserstoff substituiert sind.

5. Zusammensetzung für Beschichtung nach einem der vorangehenden Ansprüche, wobei das kondensierte Tannin biobasiert oder synthetisch ist.

6. Zusammensetzung für Beschichtung nach einem der vorangehenden Ansprüche, umfassend ferner ein anderes Polymerisationsmittel, das aus Furfurylalkohol, Glyoxal und deren Gemischen ausgewählt ist.

7. Antihaftbeschichtungszusammensetzung, die eine Zusammensetzung für Beschichtung und mindestens ein Fluorkohlenstoffharz umfasst, wobei die Zusammensetzung für Beschichtung einen pH über 7 hat und mindestens ein kondensiertes Tannin und Wasser umfasst.

8. Antihaftbeschichtungszusammensetzung nach Anspruch 7, wobei das kondensierte Tannin als Basismotiv eine oder mehrere Monomereinheit(en) Flavan-3-ole und/oder Flavan-3,4-diole und/oder Phlorotannine hat.

9. Antihaftbeschichtungszusammensetzung nach einem der Ansprüche 7 und 8, wobei das kondensierte Tannin als Basismotiv eine oder mehrere Monomereinheit(en) hat, die der folgenden Formel entspricht/entsprechen: 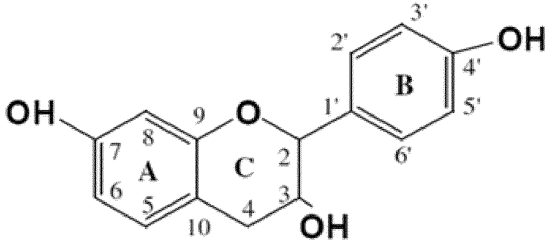 wobei
- die Kohlenstoffe an Position 6, 8, 2' und 6' von einem Wasserstoff substituiert sind,
- die Kohlenstoffe an Position 4, 5, 3' und 5' unabhängig von einer Hydroxylgruppe oder von einem Wasserstoff substituiert sind.

10. Antihaftbeschichtungszusammensetzung nach einem der Ansprüche 7 bis 9, wobei das kondensierte Tannin biobasiert oder synthetisch ist.

11. Antihaftbeschichtungszusammensetzung nach einem der Ansprüche 7 bis 10, wobei die Zusammensetzung für Beschichtung ferner mindestens ein Polymerisationsmittel umfasst, das vorzugsweise aus den Phosphatderivaten, Furfurylalkohol, Glyoxal und deren Gemischen ausgewählt ist.

12. Antihaftbeschichtungszusammensetzung nach einem der Ansprüche 7 bis 11, wobei das Fluorkohlenstoffharz aus Polytetrafluorethylen (PTFE), den Copolymeren von Tetrafluorethylen und von Perfluorpropylvinylether (PFA), den Copolymeren von Tetrafluorethylen und von Hexafluorpropen (FEP), Polyvinylidenfluorid (PVDF), den Copolymeren von Tetrafluorethylen und von Polymethylvinylether (MVA), den Terpolymeren von Tetrafluorethylen, von Polymethylvinylether und von Fluoralkylvinylether (TFE/PMVE/FAVE), Ethylen-Tetrafluorethylen (ETFE) und deren Gemischen ausgewählt ist.

13. Antihaftbeschichtungszusammensetzung nach einem der Ansprüche 7 bis 12, wobei das Fluorkohlenstoffharz 10 bis 99 Ma% der gesamten Trockenmasse der Antihaftbeschichtungszusammensetzung darstellt.

14. Beschichtung, umfassend mindestens eine Schicht der Zusammensetzung für Beschichtung nach einem der Ansprüche 1 bis 6 und/oder mindestens eine Schicht der Antihaftbeschichtungszusammensetzung nach einem der Ansprüche 7 bis 13.

15. Beschichtung, umfassend mindestens eine Schicht einer Zusammensetzung für Beschichtung und mindestens eine Schicht der Antihaftbeschichtungszusammensetzung nach einem der Ansprüche 7 bis 13, wobei die Zusammensetzung für Beschichtung einen pH über 7 hat und mindestens ein kondensiertes Tannin und Wasser umfasst.

16. Beschichtung nach einem der Ansprüche 14 und 15, die ferner mindestens eine Schicht einer Zusammensetzung umfasst, die mindestens ein Fluorkohlenstoffharz, gegebenenfalls gemischt mit einem thermisch stabilen, gegenüber einer Temperatur über 200 °C widerstandsfähigen Haftharz.

17. Artikel, der einen Untergrund umfasst, der zwei gegenüberliegende Flächen umfasst, wobei mindestens eine der gegenüberliegenden Flächen des Untergrunds mit der Beschichtung nach einem der Ansprüche 14 bis 16 beschichtet ist.

## Claims

1. A coating composition comprising at least one condensed tannin and water, and having a pH greater than 7, **characterised in that** it further comprises at least one polymerisation agent chosen from phosphate derivatives.

2. The coating composition according to claim 1, wherein the mass content of water is of between 50% and 95% relative to the total mass of water and condensed tannin.

3. The coating composition according to any one of the preceding claims, wherein the condensed tannin has as its base unit one or more flavan-3-ols and/or flavan-3,4-diols and/or phlorotannins monomer unit(s).

4. The coating composition according to any one of the preceding claims, wherein the condensed tannin has as its base unit one or more monomer unit(s) corresponding to the following formula: 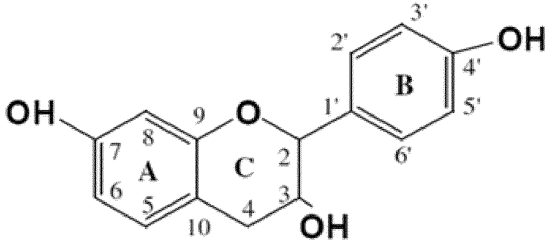 in which
- the carbons in position 6, 8, 2' and 6' are substituted by a hydrogen,
- the carbons in position 4, 5, 3' and 5' are independently substituted by a hydroxyl group or by a hydrogen.

5. The coating composition according to any one of the preceding claims, wherein the condensed tannin is biosourced or synthetic.

6. The coating composition according to any one of the preceding claims, further comprising another polymerisation agent chosen from furfuryl alcohol, glyoxal and mixtures thereof.

7. A non-stick coating composition comprising a coating composition and at least one fluorocarbon resin, the coating composition having a pH greater than 7 and comprising at least one condensed tannin and water.

8. The non-stick coating composition according to claim 7, wherein the condensed tannin has as its base unit one or more flavan-3-ols and/or flavan-3,4-diols and/or phlorotannin monomer unit(s).

9. The non-stick coating composition according to any one of claims 7 and 8, wherein the condensed tannin has as its base unit one or more monomer unit(s) corresponding to the following formula: 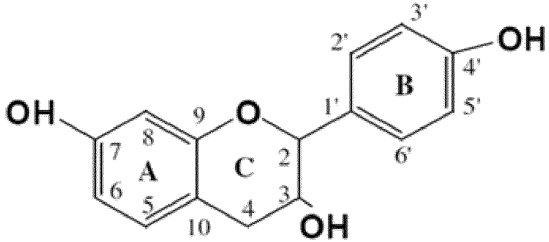 in which
- the carbons in position 6, 8, 2' and 6' are substituted by a hydrogen,
- the carbons in position 4, 5, 3' and 5' are independently substituted by a hydroxyl group or by a hydrogen.

10. The non-stick coating composition according to any of claims 7 to 9, wherein the condensed tannin is biosourced or synthetic.

11. The coating composition according to any one of claims 7 to 10, wherein the coating composition further comprises at least one polymerisation agent, preferably chosen from phosphate derivatives, furfuryl alcohol, glyoxal and mixtures thereof.

12. The non-stick coating composition according to any one of claims 7 to 11, wherein the fluorocarbon resin is chosen from polytetrafluoroethylene (PTFE), copolymers of tetrafluoroethylene and perfluoropropyl vinyl ether (PFA), copolymers of tetrafluoroethylene and hexafluoropropene (FEP), polyvinylidene fluoride (PVDF), copolymers of tetrafluoroethylene and polymethylvinylether (MVA), terpolymers of tetrafluoroethylene, polymethylvinylether and fluoroalkyl vinyl ether (TFE/PMVE/FAVE), ethylene tetrafluoroethylene (ETFE), and mixtures thereof.

13. The non-stick coating composition according to any one of claims 7 to 12, wherein the fluorocarbon resin constitutes from 10 to 99% by mass of the total dry mass of the non-stick coating composition.

14. The coating comprising at least one layer of the coating composition according to any one of claims 1 to 6 and/or at least one layer of the non-stick coating composition according to any one of claims 7 to 13.

15. The coating comprising at least one layer of coating composition and at least one layer of the non-stick coating composition according to any one of claims 7 to 13, the coating composition having a pH greater than 7 and comprising at least one condensed tannin and water.

16. The coating according to any one of claims 14 and 15, further comprising at least one layer of a composition comprising at least one fluorocarbon resin, optionally mixed with a thermostable bonding resin resistant to a temperature above 200°C.

17. An article comprising a support comprising two opposite faces, at least one of the opposite faces of the support being coated with the coating according to any one of claims 14 to 16.
